# EUROPEAN PATENT SPECIFICATION

(11) **EP 2 569 759 B1**
(45) Date of publication and mention of the grant of the patent: **23.12.2020**
(21) Application number: 11719556.0
(22) Date of filing: 12.05.2011
(51) Int. Cl.: G07C 11/00, G06Q 10/02

(54) **SYSTEM FOR REGULATING ACCESS TO A RESOURCE**
SYSTEM ZUM REGULIEREN VON ZUGRIFF AUF EINE RESSOURCE
SYSTÈME DE RÉGULATION D'ACCÈS À UNE RESSOURCE

(30) Priority: 12.05.2010 US 778369; 12.05.2010 GB 201007970
(43) Date of publication of application: 20.03.2013
(73) Proprietor: Accesso Technology Group Plc, Twyford Berkshire RG10 9NN (GB)
(72) Inventor: BUTLER, Christopher, Henley-on-Thames Oxfordshire RG9 6PB (GB)
(74) Representative: Boult Wade Tennant LLP
(86) International application number: PCT/EP2011/057728
(87) International publication number: WO 2011/141561

(56) References cited:
- EP-A1- 0 958 553
- EP-A2- 1 324 248
- WO-A1-2008/037952
- US-A- 5 978 770

## Description

### Technical Field

This invention relates to a system and method for regulating access to a resource, such as an attraction, ride, show or event, as may be found in an amusement park.

### Background to the invention

An amusement park comprises a number of attractions, for example, rides, shows and displays. Each attraction has a limited capacity for people to gain access to it at any specific time. For instance, a ride has only a certain number of seats. It is desirable that access be managed to use the attraction as efficiently as possible and that any regulation of access should be deemed as fair to all users. When more people wish to access the attraction than its instantaneous capacity allows, people who are unable to gain access immediately can be queued.

Physical queue lines are a well known way to manage access. However, the most popular attractions tend to have longer queues for access than less popular attractions. Moreover, potential users of an attraction may become bored queuing in a line. Managing access to a resource efficiently whilst minimising the length of queue line is difficult.

An approach for managing queues has been described in International Patent Application Number PCT/GB2009/002640 by the same inventors as this application. In this approach, users are each provided with a portable access key. Each portable access key has an associated respective variable access parameter. For example, the variable access parameter may comprise a number that increases over time. Each resource has an associated access criterion and the variable access parameter for the portable access key must meet the access criterion before the user of the portable access key can access the resource. For example, where the variable access parameter comprises a number, the access criterion may comprise a threshold value.

A user of a portable access key whose variable access parameter meets the access criterion may join an access queue. This is a physical waiting line. The access criterion is then set on the basis of a characteristic for the access queue, such as the queue length.

Unlike other systems, this system does not require a communications network to inform a user as to whether they are able to access a resource, since the controller only sets a criterion and not a specific time for access to the resource. As the variable access parameter changes, the user is able to compare it with the access criterion and thereby determine whether they are able to access the resource. The cost and complexity of the system is therefore reduced. Furthermore, this encourages users to wait before deciding which attraction to use, as opposed to choosing an attraction and then waiting in a line.

Since the access criterion is based on a parameter of the access queue, specifically relating to the number of users in the access queue, the access criterion can be set to adjust the number of users in the access queue accordingly. For example, the average time spent waiting in the access queue can therefore be minimised, improving the efficiency of the system.

This system allows some control over the size of the access queue. Nevertheless, further reduction in the size of the access queue is desirable.

US5 978 770 describes "A system and method for assigning and managing patron reservations to one or more of a plurality of attractions receive reservation requests at personal communication devices (PCDs). Reservation requests are transmitted to a computer associated with the selected attraction, which determines a proposed reservation time based on information describing the attraction, the patron, previously-made reservations maintained in a virtual queue, and the current state of a physical queue associated with the attraction. Proposed reservation time is transmitted to the PCD for confirmation or rejection by the patron. Confirmed reservations are entered in the virtual queue. Patrons are alerted by the PCD when their reservation time is approaching."

### Summary of the Invention

Against this background, there is provided a system for regulating access to a resource by a plurality of users in accordance with claim 1. A number of additional examples useful for understanding the invention are described below.

In one example, there is provided a system for regulating access to a resource by a plurality of users, the system comprising: a plurality of portable access keys, each portable access key being provided to one of the plurality of users and having a variable access parameter associated therewith, each portable access key further allowing the respective user to indicate a desire for a number of people to access the resource and being arranged to store this indication; a queue manager, arranged to set an access criterion for the resource; a queue interface, adapted to determine that the variable access parameter for a portable access key for which a desire to access the resource has been indicated meets the access criterion, and consequently to register the portable access key in a queue sequence. The queue manager is further arranged to manage the queue sequence and to communicate to a portable access key that has been added to the queue sequence an indication of when it can access the resource. Also, the queue manager is further configured to set the access criterion for the resource on the basis of a length of the queue sequence.

A key idea is that the access queue to use the attraction is mostly virtual (in other words, electronic). This is implemented using a virtual buffer queue which leads to the allocation of time slots for individual users. Since this queue is managed electronically, the portable access key advantageously comprises a transceiver. The transceiver is beneficially adapted to receive the communication that provides an indication of when the portable access key can access the resource.

Advantageously, the system is configured to set the variable access parameter for each of the plurality of portable access keys independently from the queue sequence length. This means that the access criterion controls access to the resource and the variable access parameter, which is specific to a portable access key, can be set without knowledge of this criterion. In this way, the access criterion can be adjusted independently from the variable access parameter.

In the preferred embodiment, the queue interface is arranged to register the portable access key at the back of the queue sequence and wherein the queue manager is further arranged to maintain the queue sequence and to remove the registration of portable access keys from the front of the queue sequence at a known rate. In other words, the queue manager maintains and administers a full electronic queue. This queue is deterministic in nature. In other words, the queue manger registers each portable access key's position in the virtual queue.

Optionally, the queue manager is configured to remove the registration of portable access keys from the front of the queue sequence at a rate that is based on a throughput rate for the resource. In this way, the virtual buffer queue is maintained to supply users to the resource at an optimal rate.

Preferably, the queue interface forms part of the portable access key. Consequently, the portable access key checks that the variable access parameter meets the access criterion. Additionally or alternatively, the portable access key comprises a transmitter configured to communicate the indication of a desire to the queue interface. A part or all of the queue interface may then form part of the queue manager.

In the preferred embodiment, the queue manager is further configured to store the indication of when a portable access key can access the resource. This allows the queue manager to confirm that the user or users of a portable access key are able to access the resource.

The variable access parameter associated with a portable access key is adjusted when the queue manager stores an indication of when the portable access key can access the resource. It is typically reduced on the basis of the access criterion, although when the variable access parameter is a number, it can be set to zero.

In one embodiment, the queue manager is further arranged to determine a waiting time for the resource, and to communicate the waiting time and access criterion to the portable access keys. The queue interface forms a part of the portable access key, and is further arranged to communicate the determination that the variable access parameter meets the access criterion to the queue manager as a registration, and then to determine a time for the user of the portable access key to access the resource on the basis of the waiting time received from the queue manager. Also, the queue manager is further arranged to receive the registrations from the portable access keys, to determine the length of the queue sequence and the waiting time for the resource on the basis of the number of registrations received, and to set the access criterion for the resource on the basis of the number of users waiting to access the resource.

In this embodiment, no virtual queue is actually maintained by the queue manager. Instead, a statistical approximation of the virtual queue is used. The queue manager establishes how many users wish to join the virtual queue and appropriately selects the throughput for the virtual queue, that is the rate of departure from the front of the virtual queue. Then, the queue manager can estimate a length for the virtual queue and consequently a waiting time in the virtual queue. Each portable access key determines that it should join the virtual queue based on the received access criterion. Each portable access key then leaves the virtual queue based on the received waiting time. This reduces the communications requirements between the portable access keys and the queue manager and is therefore potentially more efficient in its communications infrastructure.

Preferably, the system further comprises: an access barrier, having an open state allowing passage through the access barrier and a closed state denying access to the resource; and a detector, located at the access barrier and adapted to identify a portable access key brought into the vicinity of the detector. The controller is then further arranged to set the access barrier in its open state if the queue manager or the portable access key has stored an indication that the portable access key identified by the detector can access the resource at the time of detection. This regulates access to the resource automatically.

Using the access barrier creates a physical buffer queue. This may be small and allows for variations in the timeliness with which users arrive. However, with a virtual buffer queue feeding in to the physical buffer queue, and users given a specific time slot, the physical buffer queue can be kept short under almost all conditions.

Optionally, each of the plurality of portable access keys comprises a portable module comprising a transmitter, arranged to transmit a unique identifier for the portable module. Then, the detector may comprise a receiver arranged to receive the transmitted unique identifier.

With the increasing ubiquity of Internet-enabled mobile telephones, the portable module may be any communications device, but particularly a mobile telephone. Such a telephone, with reliable communications to a server such as a queue manager, allows the server to potentially have complete knowledge about the status of every user and every resource. In particular, the mobile telephone can be arranged to operate specific software to interface with the queue manager.

The variable access parameter comprises a number. Then, for each of the plurality of portable access keys, the system is arranged to measure the time elapsed since the respective variable access parameter was changed and to increase the respective variable access parameter based on the measured time elapsed. In some embodiments, multiple users may be associated with a single portable access key. In this case, the system is arranged to increase the variable access parameter for a portable access key based on the measured time elapsed and the number of users associated with the portable access key. Additionally or alternatively, the queue interface is arranged to set the access criterion by determining a threshold.

In another aspect, the present disclosure provides a system for regulating access to a first resource and a second resource by a plurality of users, the system comprising: the system as defined above in association with the first resource; a second queue manager, arranged to set a second access criterion for the second resource; a second queue interface, adapted to determine that the variable access parameter for a portable access key for which a desire to access the second resource has been indicated meets the second access criterion, and consequently to register the portable access key at the back of a second queue sequence. The second queue manager is further arranged to manage the second queue sequence and to communicate to a portable access key that has been added to the queue sequence an indication of when it can access the resource. The second queue manager is further configured to set the second access criterion for the second resource on the basis of a length of the second queue sequence.

In a further aspect, there is provided a method for regulating access to a resource by a plurality of users, the method comprising: providing a portable access key to each of the plurality of users, each portable access key having a variable access parameter associated therewith; receiving and storing an indication from a user of a desire for a number of people to access the resource using the portable access key; setting an access criterion for the resource; determining that the variable access parameter for a portable access key for which a desire to access the resource has been indicated meets the access criterion, and consequently registering the portable access key in the back of a queue sequence; managing the queue sequence; and communicating to a portable access key that has been added to the queue sequence an indication of when it can access the resource. The access criterion is set for the resource on the basis of a length of the queue sequence.

Optionally, the variable access parameter is set for each of the plurality of portable access keys independently from the queue sequence length.

In the preferred embodiment, the step of registering the portable access key in a queue sequence comprises registering the portable access key at the back of the queue sequence and the step of managing the queue sequence comprises maintaining the queue sequence. Then, the method further comprises removing the registration of portable access keys from the front of the queue sequence at a known rate.

Beneficially, the step of removing the registration of portable access keys from the front of the queue sequence is at a rate that is based on a throughput rate for the resource. The method further comprises adjusting the variable access parameter associated with a portable access key when an indication of when the portable access key can access the resource is stored.

In an alternative embodiment, the step of determining is carried out at each portable access key. Then, the method further comprises: determining a waiting time for the resource in a queue manager, and communicating the waiting time and the access criterion from the queue manager to the portable access keys; communicating the determination that the variable access parameter meets the access criterion from the portable access key to the queue manager as a registration; receiving the registrations from the portable access keys at the queue manager; determining the length of the queue sequence and the waiting time for the resource at the queue manager on the basis of the number of registrations received; setting the access criterion for the resource on the basis of the number of users waiting to access the resource; and determining, at the portable access key, a time for its user to access the resource, on the basis of the waiting time received from the queue manager.

In the preferred embodiment, the variable access parameter comprises a number. Then, the method further comprises measuring, for each of the plurality of users, the time elapsed since their respective variable access parameter was changed; and increasing, the variable access parameter for each of the plurality of users, based on the respective measured time elapsed. Additionally or alternatively, the access criterion is set by determining a threshold.

### Brief Description of the Drawings

The invention may be put into practice in various ways, one of which will now be described by way of example only and with reference to the accompanying drawing in which:

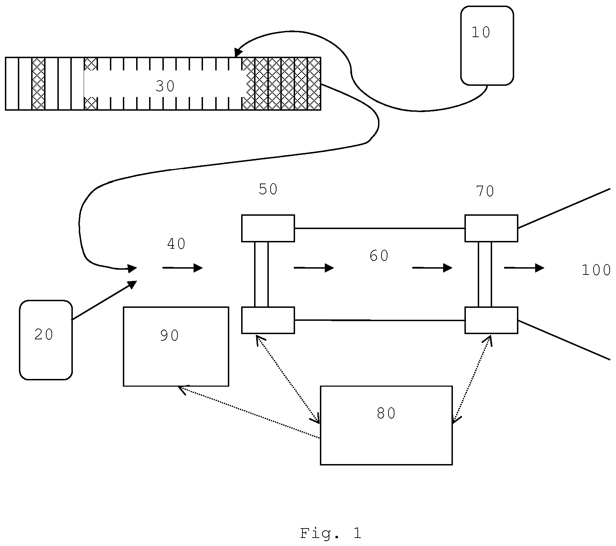

Figure 1 shows an schematic embodiment of the present invention.

### Description of Preferred Embodiments

Referring first to Figure 1, there is shown a schematic embodiment of the present invention. Each user is provided with either software for their own communication device 10, such as a mobile telephone, or a dedicated communication device 10 operating with appropriate software. In general, such a device can be referred to as a portable access key. The user wishes to visit attraction 100. In order to do so, the user will be processed in virtual queue 30. They will then arrive at entrance 40, pass through access barrier 50, physical queue 60 and entrance barrier 70. The system is controlled by queue manager 80, which interfaces with a public display 90.

Each communication device 10 comprises a processor, a memory, a transceiver, and a display. These are not shown in Figure 1. The memory stores a variable access parameter associated with that communication device 10 . The display is configured to display the variable access parameter, which is a number. The transceiver can transmits an identifier, which is unique to that communication device 10.

The processor of the communication device 10 manages the variable access parameter, which is increased with increasing time. For instance, for each minute that the portable module processor is operative, the variable access parameter is increased by one unit.

The communication device 10 also has functionality to allow the user to indicate a desire to use the attraction 100. The queue manager 80 sets an access criterion for the attraction 100. This is a threshold level. When the communication device 10 identifies that the associated variable access parameter meets the access criterion and a desire to use the attraction 100 has been received, it communicates this information as a reservation request to queue manager 80 using its transmitter.

Queue manager 80 then adds the communication device 10 to the back of the virtual queue 30. This is not a physical queue, but rather an abstract queue structure, stored electronically and managed by the queue manager 80. The queue manager removes a communication device 10 when it reaches the front of the virtual queue 30. The rate of removal is approximately the same as the throughput rate for the attraction 100.

When a communication device 10 reaches the front of the virtual queue 30, they are able to access the attraction 100. The queue manager 80 is programmed to assume that the throughput for the attraction 100 will remain constant for the period during which the communication device 10 is in the virtual queue 30. Hence, the queue manager 80 can predict the time at which the user of the communication device 10 will be able to access the attraction 100. Consequently, as soon as the communication device 10 joins the virtual queue 30, the queue manager 80 provides the communication device 10 with an estimated time slot for accessing the attraction 100. However, this estimated time slot can change as the communication device 10 is progressed through the virtual queue 30, due to changes in the ride throughput, such as those caused by breakdowns.

The user of the communication device 10 then arrives at entrance 40. A detector (not shown) detects the communication device 10. If the estimated time slot for the communication device 10 has arrived, the access barrier 50 is then opened. This allows the user or users of the communication device 10 to join the physical queue 60. The access barrier 50 is a turnstile. The physical queue 60 should be relatively short, since all the people waiting have been allocated a time slot by the queue manager 80 on the basis of the throughput rate for the attraction 100. On passing through the access barrier 50, the variable access parameter for the user's communication device 10 is reduced by the threshold level.

When the user or users reach the front of the physical queue 60, they pass through an entrance barrier 70 to the attraction 100. This is also a turnstile and is used to determine the throughput rate for the attraction 100.

The number of people in the physical queue 60 can be monitored in the same manner as described in International Patent Application Number PCT/GB2009/002640. The total number of people who have passed through the entrance barrier 70 are subtracted from the total number who have passed through the access barrier 50. Then, a correction to this result is applied, determined by comparing the value of the count of people passing through entrance barrier 70 with the count of the number of people passing through access barrier 50 at the time when that user now passing through the entrance barrier 70 passed through the access barrier 50. If there have been no counting errors, then the two values should be equal. The use of a unique identifier in the communication device 10 is one method of identifying the number of users passing through the access barrier 50 and entrance barrier 70.

The throughput of the attraction 100 is monitored by measuring the average rate at which users pass through the entrance barrier 70. This rate is controlled by the operators of the attraction 100. However, this measured throughput will be an underestimate if the physical buffer queue 60 becomes empty. It is therefore desirable that the queue manager 80 regulates the flow of users from the virtual buffer queue 30 to the physical buffer queue 60 in order to avoid this condition. Of course, if the virtual buffer queue 30 becomes empty, then an empty buffer queue 60 may become inevitable. At the same time, the queue manager 80 can regulate the size of the physical buffer queue 60 so that it is no larger than is necessary to achieve this.

The queue manager 80 regulates the flow of users from the virtual buffer queue 30 to the physical buffer queue 60 by adjusting the throughput value used in the calculation of the slot times in the virtual buffer queue 30. This throughput value will be the same on average as the measured ride throughput. However, it may for periods be a little higher or a little lower as necessary in order to adjust the length of the physical buffer queue.

The entrance barrier 70 is opened when the attraction is available to accept new users. The entrance barrier 70 is set in a locked state by default, so that it cannot be set into an open state and no user can pass through and gain access to the attraction. When capacity on the attraction is available and the attraction is ready to receive users, the entrance barrier 70 is unlocked. When enough users have passed through to fill the capacity of the attraction, the entrance barrier 70 is again locked.

In this way, long waiting times in the access queue 60 can be mitigated by reducing the number of users who are able to join the access queue 60.

The queue manager 80 periodically sets the access criterion on the basis of the length of the virtual queue 30. This length is determined by the number of communication devices 10 in the virtual queue 30 and the number of users connected with each communication device 10. The access criterion is a threshold, the level of which is set on the basis of the length of the virtual queue 30. More specifically, the access criterion is a function of the current and past lengths of the virtual queue 30, and of the measured throughput for the attraction 100. Although it does not necessarily increase in response to an increase in the length of the virtual queue 30, an increase is the most likely response. For example, if the length of the virtual queue 30 increases, the threshold level is also increased. Conversely, the threshold level is reduced if the length of the virtual queue 30 decreases. This process of setting the threshold is the same as that described in International Patent Application Number PCT/GB2009/002640.

The queue manager 80 will regulate the threshold level (tariff) in order to keep the virtual buffer queue 30 as short as possible, but without becoming either empty (and thus underutilising the attraction's capacity), or causing excessively rapid or confusing (to the users) changes in the threshold.

The threshold is provided to the users of communication devices 10 by communication of this information using a wireless link from the queue manager 80. The access criterion is thereby notified to the users, which they can compare with the variable access parameter displayed on their communication device 10.

If the communication device 10 contains an RFID device, this may be used to identify the user at the access barrier 50 and entrance barrier 70. If not, alternate mechanisms include infra-red communications, a bar code displayed on the telephone, an access code to be typed in on a keypad, a coded sound burst played by the telephone, or an Internet message from the telephone.

The physical buffer queue 60 is regulated to avoid it growing to completely fill the available space. It is desirable that any user who is entitled to pass through the access barrier 50 can do so without being significantly impeded by other users.

This system can be extended for multiple attractions. Then, each communication device 10 accumulates its variable access parameter, and at this time, the user does not have to decide which attraction he is queuing for. After accumulating sufficient credits, the user makes a final selection of an attraction. They then join the virtual queue and are allocated a time slot. At the allocated time, the user arrives at the attraction, and joins a short physical access queue. The user reaches the front of the physical queue, and then enters the attraction.

From the perspective of user with a communication device 10, they can run an application, which presents them with a display showing the current level of their variable access parameter, and the thresholds associated with each attraction. The current duration of the virtual buffer queue 30 for each attraction will also be displayed. They can choose to join the virtual buffer queue 30 for any attraction for which they have sufficient credits. This request will be sent to the server, which will then allocate to them the next available time slot in the virtual buffer queue 30 (or time slots if multiple users have been associated with that communication device 10).

Users could also have the option to reserve a slot that is later than the one selected above (this slot can of course only be selected from among those that are still available). The threshold level would be the same regardless of whether or not they take up this option. In other words, it would be the threshold level that applied at the time the reservation was made.

Communication devices 10 in the virtual buffer queue 30 will be allocated a time slot during which the respective user or users should join the physical buffer queue 60. The duration of these time slots will be set according to a desired throughput. This will sometimes lead to time slots with short durations of a minute or less. It may be unreasonable to expect users to be this precise in their arrival times. So the users will be given a time window surrounding their allocated time slot during which they may join the physical buffer queue.

One possible risk is that users could speculatively allocate a place for themselves in the virtual buffer queue 30, and then either cancel or not turn up during their allotted time slot. To deter this behaviour, the user could be subject to a reduction in their variable access parameter if they do either of these things.

The number of people associated with a communication device 10 is set at registration. Moreover, the user is able to use the communication device 10 to select the number of people who wish to access a particular attraction, provided that the number is less than or equal to the number of people registered with that communication device 10.

In practice, a single variable access parameter is associated with each portable access key. The rate of increase of that parameter with time would be independent of the number of associated people. In effect it would represent a combined single variable access parameter for all of the registered people for that portable access key. If not all of the people wished to access a particular attraction, the variable access parameter would still be reduced when any of the people associated with the portable access key use the attraction.

For those users without a suitable communication device 10, a portable module 20 can be provided. This is another form of portable access key, which will allow them to accumulate their variable access parameter and join the physical buffer queue 60 in the same manner as described in International Patent Application Number PCT/GB2009/002640. The access criterion for these users, in the form of the threshold level, is displayed on public display 90. Public display 90 is provided with this information by queue manager 80.

The thresholds that they will see on the information displays 90 and which will apply to them, will also be set by the queue manager 80, but will be different to the thresholds shown on the a communication device 10. This is because the queue manager 80 will adjust these thresholds on the basis of a characteristic of the physical buffer queue 60 and not the virtual buffer queue 30. Since these are different queues, they need to be regulated independently. In addition, the users with portable modules 20 will not be allocated places in the virtual buffer queue 30, so they would have a time advantage if the threshold levels were the same. The thresholds can be provided to the users of portable modules 20 using the public display 90.

The users of portable modules 20 will generally be provided with higher threshold levels (access criteria) than the users of communication devices 10. This would compensate for the fact that they can directly join the physical buffer queue 60 once their variable access parameter has reached a sufficient level, and will not have to pass through the virtual buffer queue 30.

In effect this system combines the virtual queue-based system described previously above with the system described in International Patent Application Number PCT/GB2009/00264. Both systems share a common physical buffer queue 60.

There are a number of ways that the queue manager 80 could divide the available ride capacity between the users of portable modules 20 and the users of communication devices 10.

One method would be to divide the available ride capacity according to the proportions of users using the two types of device. So if 10% of the users were using portable modules 20, then 10% of the ride capacity could be allocated to these users. This could be achieved by using a nominal throughput of 90% of the measured ride capacity when allocating the time slots in the virtual buffer queue 30. The length of the physical buffer queue 60 could then be controlled by adjusting the threshold level for users of portable modules 20 in the manner described in International Patent Application Number PCT/GB2009/00264.

Another method would be to set the threshold level for users of portable modules 20 to be equal to the threshold level for users of communication devices 10 plus the current wait time in the virtual buffer queue 30. Then, to regulate the length of the physical buffer queue 60, the rate of removal of communication devices 10 from virtual buffer queue 30 can be adjusted.

When regulating a limited resource, a queue serves two purposes. The first is to balance supply and demand, by increasing the cost to the customer to the point where the average supply exactly matches the average demand. This cost is in the form of time spent queuing. The second purpose is to ensure that the resource is kept fully utilized by providing a reservoir of customers.

A virtual queue reduces the time spent physically standing in line when queuing. However, existing virtual queues require a choice to be made about what resource to queue for in order to express demand for the resource.

In many cases, the size of queue required to balance supply and demand is much greater than that necessary to provide an adequate reservoir for the resource. Decoupling the time when customers start to queue for a resource and the time when they have to decide which resource they are queuing for is advantageous. The former must be set to balance supply and demand for the resource, whereas the latter only needs to be set to ensure an adequate reservoir of customers. By using a variable access parameter and access criterion, there is no link between the queuing time and the decision time, but a physical queue is still required to provide an adequate reservoir of customers.

The concept described above combines the idea of decoupling the time when customers start to queue and the time when they decide the resource they are queuing for with the idea of a virtual queue. This minimizes the time spent in a physical queue, and maximises the delay before the choice between resources must be made.

Whilst a preferred embodiment has been described above, the skilled person will recognise that the present invention can be implemented in a number of alternative ways. For example, the throughput rate for the attraction 100 can be set as equal to its capacity and not be based on the determination made at the entrance barrier 70.

Multiple service levels can be implemented by allowing different rates of accumulation for the variable access parameter in a communication device 10 or portable module 20. Users using the higher service level are allocated time slots in the same way as for other users. No users with allocated time slots would be pushed back.

Those users who know which attraction they are queuing for could implement on their communication device 10 a feature that allows them to automatically reserve a time slot for them as soon as their variable access parameter meets the access criterion. The interface on their communication device 10 could be adapted specifically to provide this functionality. This prevents them from needing to check regularly if their variable access parameter meets the access criterion.

If a number of communication devices 10 become eligible to join the virtual queue 30 simultaneously, the server would allocate their places in the virtual queue in time-order of the communication devices 10 selecting this option. Not all of the communication devices 10 would necessarily be added to the virtual queue 30 at this time, because the threshold of the access criterion may increase as a result of the other communication devices 10 being added to the virtual queue 30.

If a communication device 10 has sufficient credits to cover the combined thresholds of two or more attractions, then they could be allowed to join the virtual queues 30 for these at the same time.

The queue manager 80 could ensure that the allocated slot times did not clash. If the slot times came in to conflict later on, due to delays in one or more of the attractions, the queue manager 80 could resolve these by moving the user to a later unoccupied slot for one of the attractions.

Users could use their communication devices 10 to select multiple attractions for automatic reservation. The queue manager 80 would allocate the communication device 10 to join the virtual queue 30 for each selected attraction in turn, once their variable access parameter meet the respective access criterion for the attraction.

In another embodiment, the use of variable access parameters and access criteria could be hidden from the users. They would just see the system as one where they select an attraction, and then after waiting for a period they are issued with a time slot to use the attraction.

To the user, such a system would appear similar to other virtual queuing systems. However, a benefit of this over a conventional virtual queue structure is that higher service levels may be used without causing explicit disruption. This is because the only users affected by the higher service level users pushing in are those who have not yet been allocated a time slot.

This system also allows a user to abandon one queue and join another without either wasting the time spent queuing, or explicitly disrupting the queues they are leaving or joining.

When multiple people are associated with a single portable access key, other optional features are possible. Each person associated with a portable access key could have their own individual variable access parameter. Moreover, these multiples variable access parameters could be lumped together. Then, the rate of increase of the combined variable access parameter with time would be proportional to the number of people registered for the portable access key. When requesting access to a ride, the threshold level for this group of people would then be the threshold level for a single person multiplied by the number of people wishing to access the attraction. Thus, if not all the people associated with the portable access key wished to access the attraction then the others could do so sooner.

Another alternative, is that the portable access key holds a separate independent variable access parameter for each associated user. In this case, for each ride reserved, the holder of the portable access key would specify the members of their group who wished to ride. The individual variable access parameter for each member would determine their individual entitlement to ride, and if they were entitled, be modified accordingly.

A further alternative implementation could replace the deterministic allocation of time slots to communication devices 10 in the virtual queue 30 with a statistical approach.

Such an approach to virtual queuing is described in WO-2008/037952. As with the system described there, the queue manager 80 broadcasts to the communication devices 10 the current length of the virtual queue 30 and throughput for each attraction 100. It also broadcasts the threshold level of the access criterion for each attraction 100.

The communication device 10 would have a variable access parameter which accumulates as previously described and would also take over some of the functionality previously described in relation to the queue manager 80. For example, the communication device 10 would determine when its variable access parameter meets the threshold level for the queue of the desired attraction 100. At that stage, it determines that it should join a virtual queue, and communicates this to the queue manager 80. However, no virtual queue is actually maintained.

The queue manager 80 collects the aggregate data informing it of the number of users who have indicated a desire to access each attraction 100 and whose variable access parameters meet the access criterion. It uses this information to determine a statistical length for a virtual queue, but it does not need to store or manage such a virtual queue.

Instead, the communication device 10 has received the current length of virtual queue 30 as broadcast from the queue manager 80. This would provide the indication of when the user could access the attraction, but a specific time slot would be determined by the communication device 10 using this information.

The size of the physical buffer queue 60 would be regulated by altering the broadcast throughputs of the attractions. Each communication device currently in a virtual queue 30 would monitor the broadcast throughput of that queue, and each time it changed would recalculate the displayed time slot to reflect that change.

The physical buffer queue 60 and associated access barrier 50 and entrance barrier 70 would remain the same as described above.

This statistical system may not be as effective as the fully slotted system. Its benefit is that like the system described in WO-2008/037952, it can operate effectively in an environment with poor radio communications. Hence, it may not be optimal for a system where good communication links are available for the devices 10, but could be useful when using portable modules 20.

## Claims

1. A system for regulating access to a resource (100) by a plurality of users, the system comprising:
a plurality of portable access keys (10), each portable access key being provided to one of the plurality of users and having a variable access parameter associated therewith, each portable access key further allowing the respective user to indicate a desire for a number of people to access the resource and being arranged to store this indication;
a queue manager (80), arranged to set an access criterion for the resource;
a queue interface, adapted to determine that the variable access parameter for a portable access key for which the desire for the number of people to access the resource has been indicated meets the access criterion, and consequently to register the portable access key and the desired number of people in a queue sequence (30);
wherein the queue manager is further arranged to receive the registration of the portable access key and the desired number of people in the queue sequence, to manage the queue sequence and to communicate to a portable access key that has been added to the queue sequence an indication of when it can access the resource, wherein the portable access key comprises a transceiver configured to receive the indication of when it can access the resource, wherein the variable access parameter associated with the portable access key is reduced after the queue manager communicates an indication of when the portable access key can access the resource; and
wherein the queue manager is further configured to set the access criterion for the resource on the basis of a length of the queue sequence, wherein the length of the queue sequence is determined by a number of portable access keys registered in the queue sequence and the desired number of people associated with each portable access key,
wherein the queue interface forms part of the portable access key or wherein the transceiver of the portable access key is configured to communicate the indication of the desire for the number of people to access the resource to the queue interface,
wherein the variable access parameter comprises a number and wherein, for each of the plurality of portable access keys, the system is arranged to measure the time elapsed since the respective variable access parameter was reduced and to increase the respective variable access parameter based on the measured time elapsed.

2. The system of claim 1, wherein the system is configured to set the variable access parameter for each of the plurality of portable access keys independently from the queue sequence length.

3. The system of claim 1 or claim 2, wherein the queue interface is arranged to register the portable access key at the back of the queue sequence and wherein the queue manager is further arranged to maintain the queue sequence and to remove the registration of portable access keys from the front of the queue sequence at a known rate.

4. The system of claim 3, wherein the queue manager is configured to remove the registration of portable access keys from the front of the queue sequence at a rate that is based on a throughput rate for the resource.

5. The system of any of claims 3 to 4, wherein the queue manager is further configured to store the indication of when a portable access key can access the resource.

6. The system of claim 1 or claim 2:
wherein the queue manager is further arranged to determine a waiting time for the resource, and to communicate the waiting time and access criterion to the portable access keys;
wherein the queue interface forms a part of each portable access key, the queue interface being further arranged to communicate the determination that the variable access parameter meets the access criterion to the queue manager as a registration, and then to determine a time for the user of the portable access key to access the resource on the basis of the waiting time received from the queue manager; and
wherein the queue manager is further arranged to receive the registrations from the portable access keys, to determine the length of the queue sequence and the waiting time for the resource on the basis of the number of registrations received, and to set the access criterion for the resource on the basis of the number of users waiting to access the resource.

7. The system of any preceding claim, further comprising:
an access barrier (50), having an open state allowing passage through the access barrier and a closed state denying access to the resource;
a detector, located at the access barrier and adapted to identify a portable access key brought into the vicinity of the detector; and
a controller, arranged to set the access barrier in its open state if the queue manager or the portable access key has stored an indication that the portable access key identified by the detector can access the resource at the time of detection.

8. The system of claim 7, wherein each of the plurality of portable access keys comprises a portable module comprising a transmitter, arranged to transmit a unique identifier for the portable module, and wherein the detector comprises a receiver arranged to receive the transmitted unique identifier.

9. The system of any preceding claim, wherein the variable access parameter comprises a number and wherein the queue interface is arranged to set the access criterion by determining a threshold.

10. A system for regulating access to a first resource and a second resource by a plurality of users, the system comprising:
the system as defined by any preceding claim in association with the first resource;
a second queue manager, arranged to set a second access criterion for the second resource; and
a second queue interface, adapted to determine that the variable access parameter for a portable access key for which a desire to access the second resource has been indicated meets the second access criterion, and consequently to register the portable access key at the back of a second queue sequence;
wherein the second queue manager is further arranged to manage the second queue sequence and to communicate to a portable access key that has been added to the queue sequence an indication of when it can access the resource; and
wherein the second queue manager is further configured to set the second access criterion for the second resource on the basis of a length of the second queue sequence, wherein the variable access parameter associated with the portable access key is reduced after the second queue manager communicates an indication of when the portable access key can access the resource.

11. A method for regulating access to a resource (100) by a plurality of users, the method comprising:
providing a plurality of portable access keys (10) to the plurality of users, each portable access key being provided to one of the plurality of users and having a variable access parameter associated therewith;
receiving and storing an indication from a user of a portable access key, a desire for a number of people to access the resource using the portable access key;
setting an access criterion for the resource;
determining that the variable access parameter for the portable access key for which the desire for the number of people to access the resource has been indicated meets the access criterion, and consequently registering the portable access key and the desired number of people in a queue sequence (30);
managing the queue sequence; and
communicating to a portable access key that has been added to the queue sequence an indication of when it can access the resource;
reducing the variable access parameter associated with the portable access key after the indication of when the portable access key can access the resource has been communicated; and
wherein the access criterion is set for the resource on the basis of a length of the queue sequence, wherein the length of the queue sequence is determined by a number of portable access keys registered in the queue sequence and the desired number of people associated with each portable access key,
wherein the variable access parameter comprises a number and wherein, for each of the plurality of portable access keys, the system is arranged to measure the time elapsed since the respective variable access parameter was reduced and to increase the respective variable access parameter based on the measured time elapsed.

## Patentansprüche

1. System zum Regulieren von Zugriff auf eine Ressource (100) durch eine Vielzahl von Benutzern, wobei das System umfasst:
eine Vielzahl von portierbaren Zugriffsschlüsseln (10), wobei jeder portierbare Zugriffsschlüssel einem der Vielzahl von Benutzern zur Verfügung gestellt wird und ihm ein variabler Zugriffsparameter zugeordnet ist, jeder portierbare Zugriffsschlüssel es dem jeweiligen Benutzer ermöglicht, einen Wunsch anzugeben, dass eine Anzahl von Personen auf die Ressource zugreift, und so eingerichtet ist, dass diese Angabe gespeichert wird;
einen Warteschlangenverwalter (80), der zur Festlegung eines Zugriffskriteriums für die Ressource eingerichtet ist;
eine Warteschlangenschnittstelle, die eingerichtet ist, um zu bestimmen, dass der variable Zugriffsparameter für einen portierbaren Zugriffsschlüssel, für den der Wunsch nach der Anzahl von Personen für den Zugriff auf die Ressource angegeben worden ist, das Zugriffskriterium erfüllt, und um folglich den portierbaren Zugriffsschlüssel und die gewünschte Anzahl von Personen in einer Warteschlangensequenz (30) zu registrieren;
wobei der Warteschlangenverwalter ferner eingerichtet ist, die Registrierung des portierbaren Zugriffsschlüssels und die gewünschten Anzahl von Personen in der Warteschlangensequenz zu empfangen, die Warteschlangensequenz zu verwalten und gegenüber einem portierbaren Zugriffsschlüssel, der zu der Warteschlangensequenz hinzugefügt wurde, eine Angabe darüber zu kommunizieren, wann er auf die Ressource zugreifen kann, wobei der portierbare Zugriffsschlüssel einen Sendeempfänger umfasst, der konfiguriert ist, um die Angabe zu empfangen, wann er auf die Ressource zugreifen kann, wobei der dem portierbaren Zugriffsschlüssel zugeordnete variable Zugriffsparameter reduziert wird, nachdem der Warteschlangenverwalter eine Angabe kommuniziert hat, wann der portierbare Zugriffsschlüssel auf die Ressource zugreifen kann; und
wobei der Warteschlangenverwalter ferner konfiguriert ist, um das Zugriffskriterium für die Ressource auf Basis einer Länge der Warteschlangensequenz festzulegen, wobei die Länge der Warteschlangensequenz durch eine Anzahl von portierbaren Zugriffsschlüsseln, die in der Warteschlangensequenz registriert sind, und die gewünschte Anzahl von Personen, die jedem portierbaren Zugriffsschlüssel zugeordnet sind, bestimmt wird,
wobei die Warteschlangenschnittstelle Teil des portierbaren Zugriffsschlüssels bildet oder wobei der Sendeempfänger des portierbaren Zugriffsschlüssels konfiguriert ist, um gegenüber der Warteschlangenschnittstelle die Angabe des Wunsches für die Anzahl von Personen, auf die Ressource zuzugreifen, zu kommunizieren,
wobei der variable Zugriffsparameter eine Zahl umfasst und wobei für jeden aus der Vielzahl von portierbaren Zugriffsschlüsseln das System eingerichtet ist, die seit der Reduzierung des jeweiligen variablen Zugriffsparameters verstrichene Zeit zu messen und den jeweiligen variablen Zugriffsparameter auf Basis der gemessenen verstrichenen Zeit zu erhöhen.

2. System nach Anspruch 1, wobei das System zur Einstellung des variablen Zugriffsparameters für jeden aus der Vielzahl von portierbaren Zugriffsschlüsseln unabhängig von der Warteschlangensequenzlänge konfiguriert ist.

3. System nach Anspruch 1 oder Anspruch 2, wobei die Warteschlangenschnittstelle eingerichtet ist, den portierbaren Zugriffsschlüssel am hinteren Ende der Warteschlangensequenz zu registrieren, und wobei der Warteschlangenverwalter ferner eingerichtet ist, die Warteschlangensequenz aufrechtzuerhalten und die Registrierung von portierbaren Zugriffsschlüsseln am vorderen Ende der Warteschlangensequenz mit einer bekannten Rate zu entfernen.

4. System nach Anspruch 3, wobei der Warteschlangenverwalter zur Entfernung der Registrierung von portierbaren Zugriffsschlüsseln von dem vorderen Ende der Warteschlangensequenz mit einer auf einer Durchsatzrate für die Ressource basierenden Rate konfiguriert ist.

5. System nach einem der Ansprüche 3 bis 4, wobei der Warteschlangenverwalter ferner zur Speicherung der Angabe, wann ein portierbarer Zugriffsschlüssel auf die Ressource zugreifen kann, konfiguriert ist.

6. System nach Anspruch 1 oder Anspruch 2:
wobei der Warteschlangenverwalter ferner zum Bestimmen einer Wartezeit für die Ressource und zum Kommunizieren der Wartezeit und des Zugriffskriteriums an die portierbaren Zugriffsschlüssel eingerichtet ist;
wobei die Warteschlangenschnittstelle einen Teil eines jeden portierbaren Zugriffsschlüssels bildet, wobei die Warteschlangenschnittstelle ferner eingerichtet ist, die Bestimmung, dass der variable Zugriffsparameter das Zugriffskriterium erfüllt, gegenüber dem Warteschlangenverwalter als eine Registrierung zu kommunizieren, und dann eine Zeit für den Benutzer des portierbaren Zugriffsschlüssels für den Zugriff auf die Ressource auf Basis der von dem Warteschlangenverwalter empfangenen Wartezeit zu bestimmen; und
wobei der Warteschlangenverwalter ferner eingerichtet ist, die Registrierungen von den portierbaren Zugriffsschlüsseln zu empfangen, die Länge der Warteschlangensequenz und die Wartezeit für die Ressource auf Basis der Anzahl der empfangenen Registrierungen zu bestimmen und das Zugriffskriterium für die Ressource auf Basis der Anzahl von Benutzern, die auf den Zugriff auf die Ressource warten, festzulegen.

7. System nach einem vorangehenden Anspruch, ferner umfassend:
eine Zugriffsbarriere (50) mit einem offenen Status, der den Durchgang durch die Zugriffsbarriere erlaubt, und einem geschlossenen Status, der den Zugang zur Ressource verweigert;
einen Detektor, der sich an der Zugriffsbarriere befindet und geeignet ist, einen portierbaren in die Nähe des Detektors gebrachten Zugriffsschlüssel zu identifizieren; und
eine Steuerung, die eingerichtet ist, die Zugriffsbarriere in ihren offenen Status zu versetzen, wenn der Warteschlangenverwalter oder der portierbare Zugriffsschlüssel eine Angabe gespeichert hat, dass der von dem Detektor erkannte portierbare Zugriffsschlüssel zum Zeitpunkt der Erkennung auf die Ressource zugreifen kann.

8. System nach Anspruch 7, wobei jeder aus der Vielzahl von portierbaren Zugriffsschlüssel ein portierbares Modul umfasst, das einen Sender umfasst, der eingerichtet ist, eine eindeutige Kennung für das portierbare Modul zu senden, und wobei der Detektor einen Empfänger umfasst, der zum Empfang der eindeutigen Kennung eingerichtet ist.

9. System nach einem vorangehenden Anspruch, wobei der variable Zugriffsparameter eine Zahl umfasst und wobei die Warteschlangenschnittstelle eingerichtet ist, um das Zugriffskriterium durch Bestimmung eines Schwellenwertes festzulegen.

10. System zum Regulieren von Zugriff auf eine erste Ressource und eine zweite Ressource durch eine Vielzahl von Benutzern, wobei das System umfasst:
das System nach einem vorangehenden Anspruch in Verbindung mit der ersten Ressource;
einen zweiten Warteschlangenverwalter, der eingerichtet ist, um ein zweites Zugriffskriterium für die zweite Ressource festzulegen; und
eine zweite Warteschlangenschnittstelle, die zur Bestimmung geeignet ist, dass der variable Zugriffsparameter für einen portierbaren Zugriffsschlüssel, für den ein Wunsch zum Zugriff auf die zweite Ressource angegeben wurde, das zweite Zugriffskriterium zu erfüllen und folglich den portierbaren Zugriffsschlüssel am Ende einer zweiten Warteschlangensequenz zu registrieren;
wobei der zweite Warteschlangenverwalter ferner eingerichtet ist, die zweite Warteschlangensequenz zu verwalten und gegenüber einem portierbaren Zugriffsschlüssel, der der Warteschlangensequenz hinzugefügt wurde, eine Angabe darüber zu kommunizieren, wann er auf die Ressource zugreifen kann;
und
wobei der zweite Warteschlangenverwalter ferner konfiguriert ist, das zweite Zugriffskriterium für die zweite Ressource auf Basis einer Länge der zweiten Warteschlangensequenz festzulegen,
wobei der variable Zugriffsparameter, der dem portierbaren Zugriffsschlüssel zugeordnet ist, reduziert wird, nachdem der zweite Warteschlangenverwalter eine Angabe kommuniziert, wann der portierbare Zugriffsschlüssel auf die Ressource zugreifen kann.

11. Verfahren zum Regulieren von Zugriff auf eine Ressource (100) durch eine Vielzahl von Benutzern, wobei das Verfahren umfasst:
Bereitstellen einer Vielzahl von portierbaren Zugriffsschlüsseln (10) für die Vielzahl von Benutzern, wobei jeder portierbare Zugriffsschlüssel für einen der Vielzahl von Benutzern bereitgestellt wird und ihm ein variabler Zugriffsparameter zugeordnet ist;
Empfangen und Speichern einer Angabe von einem Benutzer eines portierbaren Zugriffsschlüssels, eines Wunsches für eine Anzahl von Personen, auf die Ressource unter Verwendung des portierbaren Zugriffsschlüssels zuzugreifen;
Festlegen eines Zugriffskriteriums für die Ressource;
Bestimmen, dass der variable Zugriffsparameter für den portierbaren Zugriffsschlüssel, für den der Wunsch für die Anzahl von Personen nach Zugriff auf die Ressource angegeben wurde, das Zugriffskriterium erfüllt, und folglich Registrieren des portierbaren Zugriffsschlüssels und der gewünschten Anzahl von Personen in einer Warteschlangensequenz (30);
Verwalten der Warteschlangensequenz; und
Kommunizieren an einen portierbaren Zugriffsschlüssel, der der Warteschlangensequenz hinzugefügt worden ist, einer Angabe darüber, wann er auf die Ressource zugreifen kann;
Reduzieren des variablen Zugriffsparameters, der dem portierbaren Zugriffsschlüssel zugeordnet ist, nachdem die Angabe darüber, wann der portierbare Zugriffsschlüssel auf die Ressource zugreifen kann, kommuniziert worden ist; und
wobei das Zugriffskriterium für die Ressource auf Basis einer Länge der Warteschlangensequenz festgelegt wird, wobei die Länge der
Warteschlangensequenz durch eine Anzahl von portierbaren Zugriffsschlüsseln, die in der Warteschlangensequenz registriert sind, und die gewünschte Anzahl von Personen, denen jeweils ein portierbarer Zugriffsschlüssel zugeordnet ist, bestimmt wird,
wobei der variable Zugriffsparameter eine Zahl umfasst und wobei, für jeden aus der Vielzahl von portierbaren Zugriffsschlüssel, das System eingerichtet ist, die Zeit zu messen, die verstrichen ist, seit der jeweilige variable Zugriffsparameter reduziert wurde, und den jeweiligen variablen Zugriffsparameter auf Basis der gemessenen verstrichenen Zeit zu erhöhen.

## Revendications

1. Système pour réguler l'accès à une ressource (100) par une pluralité d'utilisateurs, le système comprenant :
une pluralité de clés d'accès portables (10), chaque clé d'accès portable étant fournie à l'un de la pluralité d'utilisateurs et ayant un paramètre d'accès variable associé à celle-ci, chaque clé d'accès portable permettant en outre à l'utilisateur respectif d'indiquer un désir d'un certain nombre de personnes d'accéder à la ressource et étant conçue pour stocker cette indication ;
un gestionnaire de file d'attente (80), conçu pour définir un critère d'accès à la ressource ;
une interface de file d'attente, adaptée pour déterminer que le paramètre d'accès variable pour une clé d'accès portable pour laquelle le désir du nombre de personnes d'accéder à la ressource a été indiqué répond au critère d'accès, et par conséquent pour enregistrer la clé d'accès portable et le nombre désiré de personnes dans une séquence de file d'attente (30) ;
dans lequel le gestionnaire de file d'attente est en outre conçu pour recevoir l'enregistrement de la clé d'accès portable et le nombre désiré de personnes dans la séquence de file d'attente, pour gérer la séquence de file d'attente et pour communiquer à une clé d'accès portable qui a été ajoutée à la séquence de file d'attente une indication du moment où elle peut accéder à la ressource, où la clé d'accès portable comprend un émetteur-récepteur configuré pour recevoir l'indication du moment où elle peut accéder à la ressource, où le paramètre d'accès variable associé à la clé d'accès portable est réduit après que le gestionnaire de file d'attente communique une indication du moment où la clé d'accès portable peut accéder à la ressource ; et
dans lequel le gestionnaire de file d'attente est en outre configuré pour définir le critère d'accès à la ressource sur la base d'une longueur de la séquence de file d'attente, où la longueur de la séquence de file d'attente est déterminée par un certain nombre de clés d'accès portables enregistrées dans la séquence de file d'attente et le nombre désiré de personnes associé à chaque clé d'accès portable,
dans lequel l'interface de file d'attente fait partie de la clé d'accès portable ou dans lequel l'émetteur-récepteur de la clé d'accès portable est configuré pour communiquer l'indication du désir du nombre de personnes d'accéder à la ressource à l'interface de file d'attente,
dans lequel le paramètre d'accès variable comprend un nombre et dans lequel, pour chacune de la pluralité de clés d'accès portables, le système est conçu pour mesurer le temps écoulé depuis que le paramètre d'accès variable respectif a été réduit et pour augmenter le paramètre d'accès variable respectif sur la base du temps écoulé mesuré.

2. Système de la revendication 1, où le système est configuré pour définir le paramètre d'accès variable pour chacune de la pluralité de clés d'accès portables indépendamment de la longueur de séquence de file d'attente.

3. Système de la revendication 1 ou la revendication 2, dans lequel l'interface de file d'attente est conçue pour enregistrer la clé d'accès portable à la fin de la séquence de file d'attente et dans lequel le gestionnaire de file d'attente est en outre conçu pour maintenir la séquence de file d'attente et pour supprimer l'enregistrement des clés d'accès portables du début de la séquence de file d'attente à un taux connu.

4. Système de la revendication 3, dans lequel le gestionnaire de file d'attente est configuré pour supprimer l'enregistrement des clés d'accès portables du début de la séquence de file d'attente à un taux qui est basé sur un débit pour la ressource.

5. Système de l'une des revendications 3 et 4, dans lequel le gestionnaire de file d'attente est en outre configuré pour stocker l'indication du moment où une clé d'accès portable peut accéder à la ressource.

6. Système de la revendication 1 ou la revendication 2 :
dans lequel le gestionnaire de file d'attente est en outre conçu pour déterminer un temps d'attente pour la ressource, et pour communiquer le temps d'attente et le critère d'accès aux clés d'accès portables ;
dans lequel l'interface de file d'attente fait partie de chaque clé d'accès portable, l'interface de file d'attente étant en outre conçue pour communiquer la détermination du fait que le paramètre d'accès variable répond au critère d'accès au gestionnaire de file d'attente comme un enregistrement, puis pour déterminer un temps pour que l'utilisateur de la clé d'accès portable accède à la ressource sur la base du temps d'attente reçu à partir du gestionnaire de file d'attente ; et
dans lequel le gestionnaire de file d'attente est en outre conçu pour recevoir les enregistrements à partir des clés d'accès portables, pour déterminer la longueur de la séquence de file d'attente et le temps d'attente pour la ressource sur la base du nombre d'enregistrements reçus, et pour définir le critère d'accès à la ressource sur la base du nombre d'utilisateurs en attente d'accéder à la ressource.

7. Système de l'une des revendications précédentes, comprenant en outre :
une barrière d'accès (50), ayant un état ouvert permettant le passage à travers la barrière d'accès et un état fermé interdisant l'accès à la ressource ;
un détecteur, situé au niveau de la barrière d'accès et adapté pour identifier une clé d'accès portable amenée à proximité du détecteur ; et
une unité de commande, conçue pour mettre la barrière d'accès dans son état ouvert si le gestionnaire de file d'attente ou la clé d'accès portable a stocké une indication que la clé d'accès portable identifiée par le détecteur peut accéder à la ressource au moment de détection.

8. Système de la revendication 7, dans lequel chacune de la pluralité des clés d'accès portables comprend un module portable comprenant un émetteur, conçu pour transmettre un identifiant unique pour le module portable, et dans lequel le détecteur comprend un récepteur conçu pour recevoir l'identifiant unique transmis.

9. Système de l'une des revendications précédentes, dans lequel le paramètre d'accès variable comprend un nombre et dans lequel l'interface de file d'attente est conçue pour définir le critère d'accès en déterminant un seuil.

10. Système pour réguler l'accès à une première ressource et à une deuxième ressource par une pluralité d'utilisateurs, le système comprenant :
le système tel que défini par l'une des revendications précédentes en association avec la première ressource ;
un deuxième gestionnaire de file d'attente, conçu pour définir un deuxième critère d'accès à la deuxième ressource ; et
une deuxième interface de file d'attente, adaptée pour déterminer que le paramètre d'accès variable pour une clé d'accès portable pour laquelle un désir d'accéder à la deuxième ressource a été indiqué répond au deuxième critère d'accès, et par conséquent pour enregistrer la clé d'accès portable à la fin d'une deuxième séquence de file d'attente ;
dans lequel le deuxième gestionnaire de file d'attente est en outre conçu pour gérer la deuxième séquence de file d'attente et pour communiquer à une clé d'accès portable qui a été ajoutée à la séquence de file d'attente une indication du moment où elle peut accéder à la ressource ; et
dans lequel le deuxième gestionnaire de file d'attente est en outre configuré pour définir le deuxième critère d'accès à la deuxième ressource sur la base d'une longueur de la deuxième séquence de file d'attente, où le paramètre d'accès variable associé à la clé d'accès portable est réduit après que le deuxième gestionnaire de file d'attente communique une indication du moment où la clé d'accès portable peut accéder à la ressource.

11. Procédé pour réguler l'accès à une ressource (100) par une pluralité d'utilisateurs, le procédé comprenant les étapes consistant à :
fournir une pluralité de clés d'accès portables (10) à la pluralité d'utilisateurs, chaque clé d'accès portable étant fournie à l'un de la pluralité d'utilisateurs et ayant un paramètre d'accès variable associé à celle-ci ;
recevoir et stocker une indication provenant d'un utilisateur d'une clé d'accès portable, d'un désir d'un certain nombre de personnes d'accéder à la ressource en utilisant la clé d'accès portable ;
définir un critère d'accès à la ressource ;
déterminer que le paramètre d'accès variable pour la clé d'accès portable pour laquelle le désir du nombre de personnes d'accéder à la ressource a été indiqué répond au critère d'accès, et par conséquent enregistrer la clé d'accès portable et le nombre désiré de personnes dans une séquence de file d'attente (30) ;
gérer la séquence de file d'attente ; et
communiquer à une clé d'accès portable qui a été ajoutée à la séquence de file d'attente une indication du moment où elle peut accéder à la ressource ;
réduire le paramètre d'accès variable associé à la clé d'accès portable après que l'indication du moment où la clé d'accès portable peut accéder à la ressource a été communiquée ; et
dans lequel le critère d'accès est défini pour la ressource sur la base d'une longueur de la séquence de file d'attente, où la longueur de la séquence de file d'attente est déterminée par un nombre de clés d'accès portables enregistrées dans la séquence de file d'attente et le nombre désiré de personnes associées à chaque clé d'accès portable,
dans lequel le paramètre d'accès variable comprend un nombre et où, pour chacune de la pluralité de clés d'accès portables, le système est conçu pour mesurer le temps écoulé depuis que le paramètre d'accès variable respectif a été réduit et pour augmenter le paramètre d'accès variable respectif sur la base du temps écoulé mesuré.
